# FASCICULE DE BREVET EUROPEEN

(11) **EP 3 953 653 B1**
(45) Date de publication et mention de la délivrance du brevet: **16.08.2023**
(21) Numéro de dépôt: 20716814.7
(22) Date de dépôt: 08.04.2020
(51) Int. Cl.: F28D 1/053, B60K 11/04, F28D 1/04

(54) **DISPOSITIF DE FIXATION POUR DES ÉCHANGEURS DE CHALEUR D'UN SYSTEME D'ÉCHANGE THERMIQUE DE VÉHICULE**
BEFESTIGUNG FÜR WÄRMETAUSCHER UND WÄRMETAUSCHSYSTEM FÜR FAHRZEUGE
MOUNTING MEANS FOR HEAT EXCHANGERS AND HEAT EXCHANGE SYSTEM FOR VEHICLES

(30) Priorité: 11.04.2019 FR 1903897
(43) Date de publication de la demande: 16.02.2022
(73) Titulaire: VALEO SYSTEMES THERMIQUES, 78320 Le Mesnil Saint-Denis (FR)
(72) Inventeur: TOURNOIS, Rémi, 78322 LE MESNIL SAINT-DENIS CEDEX (FR); TRINDADE, José, 78322 LE MESNIL SAINT-DENIS CEDEX (FR); BIREAUD, Fabien, 78322 LE MESNIL SAINT-DENIS CEDEX (FR)
(74) Mandataire: Valeo Systèmes Thermiques
(86) Numéro de dépôt international: PCT/EP2020/060107
(87) Numéro de publication internationale: WO 2020/208119

(56) Documents cités:
- EP-A1- 1 146 311
- EP-A2- 0 869 325
- EP-A2- 2 265 457
- DE-A1- 19 814 028
- US-A1- 2002 056 541
- US-A1- 2018 261 526

## Description

La présente invention concerne un dispositif de fixation pour des échangeurs de chaleur d'un système d'échange thermique de véhicule.

La présente invention se rapporte plus particulièrement au domaine des systèmes d'échanges thermiques comportant un circuit de distribution de fluide caloporteur sur lequel sont disposés une pluralité d'échangeurs de chaleur, chacun apte à réaliser un échange de calories entre un flux d'air traversant le système d'échange thermique et le fluide caloporteur circulant dans cet échangeur de chaleur.

Au sein de ce type de système d'échange thermique, il est connu de superposer les échangeurs de chaleur les uns derrière les autres en regard d'une ouverture au niveau d'une calandre située sur la face avant d'un véhicule, de sorte qu'à l'arrivée d'un flux d'air frais lorsque le véhicule est en mouvement, ce flux d'air rencontre successivement chacun des échangeurs de chaleur. De tels échangeurs de chaleur peuvent avoir des fonctions diverses telles que la fonction de condenseur, de radiateur ou de sous-refroidisseur par exemple.

Afin de positionner les échangeurs de chaleur de manière appropriée en face avant du véhicule, un agencement connu consiste à fixer ces échangeurs de chaleur à un cadre de support soutenant l'ensemble du système de d'échange thermique afin de prévenir ce dernier de tous mouvements superflus, dus par exemple aux vibrations provoquées par le mouvement du véhicule.

De tels agencements sont configurés de manière à assurer une fixation de chaque échangeur de chaleur, indépendamment l'un de l'autre, au cadre de support du système d'échange thermique. Cela entraîne une multiplication des moyens de fixation et l'on comprend que ceci est pénalisant pour 'encombrement mécanique du système d'échange thermique, ainsi que pour le coût et le temps d'assemblage du système, ou encore pour la précision géométrique de l'assemblage. Un dispositif de fixation selon le préambule de la revendication 1 est connu du US 2002/056541 A1.

La présente invention vise à répondre aux problèmes visés ci-dessus en proposant un dispositif de fixation pour au moins deux échangeurs de chaleur superposés l'un par rapport à l'autre et intégrés dans un système d'échange thermique d'un véhicule, caractérisé en ce que le dispositif de fixation est un ensemble monobloc comprenant des organes de maintien des échangeurs de chaleur d'une part, et une bride de fixation à un cadre de support du système d'échange thermique d'autre part, lesdits organes de maintien étant agencés en saillie d'une seule et même plaque de fond.

Le dispositif de fixation est autrement dit un intermédiaire entre les échangeurs de chaleur et le cadre de support du système d'échange thermique. D'une manière avantageuse, il s'agit d'un seul et même dispositif de fixation qui fige la position dans le cadre de chaque échangeur de chaleur, tout en maintenant les échangeurs de chaleur entre eux, et la liaison au cadre de support du système d'échange thermique. Le dispositif de fixation permet ainsi d'assurer le bon fonctionnement du système d'échange thermique, tout en limitant les moyens de fixation et ce que cela peut engendrer en termes de matière première, de coût et d'encombrement mécanique. On comprend que le dispositif de fixation permet d'une part de figer la position de chaque échangeur par rapport au cadre de support du système d'échange thermique et permet d'autre part que la position des échangeurs entre eux soit également figée.

Le dispositif de fixation est réparti en plusieurs sections : une section destinée à assurer le maintien des échangeurs de chaleur par le biais d'organes de maintien dont les caractéristiques seront exposées par la suite, et une section assurant la fixation au cadre de support du système d'échange thermique par le biais d'une bride qui sera également décrite plus en détail par la suite.

Selon une caractéristique de l'invention, les organes de maintien sont des parois perpendiculaires à la plaque de fond et sont disposés par paires, chacune des paires étant configurée pour enserrer l'extrémité inférieure d'un échangeur de chaleur et assurer un maintien transversal de cet échangeur de chaleur. Les organes de maintien s'élèvent de manière verticale et longitudinale, sous la forme de parois plus longues que hautes, agencées en saillie de la plaque de fond. Par longitudinale et verticale, on entend selon deux axes parallèles aux droites définissant le plan d'allongement des échangeurs de chaleur, la droite longitudinale étant parallèle à la plaque de fond, et la droite verticale étant perpendiculaire à la plaque de fond.

Les organes de maintien interagissent avec l'extrémité inférieure des échangeurs de chaleur sur une distance longitudinale et verticale. Cette interaction est suffisante pour assurer le maintien mécanique. Les précisions sur les éléments assurant la fonction de maintien seront exposées plus en détail par la suite.

D'une manière avantageuse, l'extension verticale des organes de maintien limite l'encombrement mécanique vis-à-vis de connectiques tierces potentiellement présentes au niveau des échangeurs de chaleur telles que des tubulures reliées au circuit de distribution de fluide par exemple. Le fait que les organes de maintien soient agencés le long d'un bord longitudinale inférieur des échangeurs fait que l'on limite l'encombrement mécanique sur les côtés du système d'échange thermique et qu'on ne gêne ainsi pas le raccordement des tubulures.

La question de limiter l'encombrement mécanique se pose encore plus lorsque les échangeurs de chaleur présentent une superficie plus faible, par exemple si l'échangeur de chaleur est un sous-refroidisseur. Dans cette situation, l'espace disponible au niveau de la surface latérale du sous-refroidisseur est limitée. Il est donc important de limiter l'extension verticale des organes de maintien, ce que propose le dispositif de fixation selon l'invention.

Les organes de maintien sont situés de part et d'autre de l'échangeur de chaleur qu'ils maintiennent. La distance entre deux organes de maintien formant une paire d'organes de maintien est donc sensiblement égale à l'épaisseur d'un échangeur de chaleur. Les échangeurs de chaleur sont pris en tenaille par les organes de maintien et sont donc privés de tous mouvements transversaux. Les organes de maintien comprennent des éléments qui seront présentés par la suite, mais la simple présence d'une paire d'organes de maintien de part et d'autre de l'échangeur de chaleur assure en elle-même un maintien.

Selon une caractéristique de l'invention, les paires d'organes de maintien sont espacées l'une par rapport à l'autre par une zone de rigidification. La plaque de fond du dispositif de fixation est commune à chacun des organes de maintien. Ces derniers sont tous parallèles entre eux et, comme mentionné précédemment, sont disposés par paire pour chaque échangeur de chaleur. Les organes de maintien étant tous sur la même plaque de fond, le dispositif de fixation assure donc un maintien des échangeurs de chaleur entre eux. Par ailleurs, le parallélisme des paires d'organes de maintien assure également la superposition des échangeurs de chaleur entre eux. Chaque paire d'organes de maintien est située à une certaine distance l'une par rapport à l'autre. Cet écartement entre les paires d'organes de maintien est assuré par la présence de la plaque de fond commune aux organes de maintien qui s'étend entre les paires d'organes de maintien, formant une zone appelé zone de rigidification. La zone de rigidification formée par la plaque de fond assure une fixation des échangeurs de chaleur à une distance optimale les uns des autres pour le bon fonctionnement du système d'échange thermique.

Selon une caractéristique de l'invention, le dispositif de fixation peut comprendre deux paires d'organes de maintien, séparées par une zone de rigidification, la bride de fixation étant agencée dans une position centrée dans le prolongement de la zone de rigidification. Il s'agit ici d'un mode de réalisation comprenant uniquement deux paires d'organes de maintien, tel qu'illustré par la suite. Le dispositif de fixation ne comprend donc ici qu'une seule zone de rigidification séparant les deux paires d'organes de maintien. Une telle zone de rigidification est par conséquent centrée par rapport à la dimension transversale de la plaque de fond. La bride de fixation est également centrée par rapport à la dimension transversale de la plaque de fond, dans le prolongement de la zone de rigidification.

Selon une caractéristique de l'invention, les organes de maintien comprennent au moins une languette flexible apte à s'escamoter par rotation autour d'un axe longitudinal, dégageant une zone d'accueil pour la mise en place d'un échangeur de chaleur, et apte à assurer un maintien vertical, par rappel élastique en travers de la zone d'accueil. Par zone d'accueil, on entend la zone délimitée par une paire d'organes de maintien et par la plaque de fond située entre les deux organes de maintien formant ladite paire. La languette flexible est présente sur une paroi longitudinale de chaque organe de maintien. Plus précisément, la languette flexible, lorsque celle-ci est en position initiale, est confondue avec l'organe de maintien qui la comprend, à l'exception d'une rampe présente sur la languette flexible. La languette flexible est entourée d'un évidement au sein de l'organe de maintien, ce qui permet sa flexibilité.

La rampe se situe sur une des faces de la languette flexible, orientée en direction de l'autre organe de maintien formant la paire d'organes de maintien. La rampe s'étend selon un axe transversal, c'est-à-dire selon un axe perpendiculaire aux organes de maintien. La rampe présente une surface oblique et une surface plane transversale, les deux surfaces permettant respectivement l'insertion et le maintien vertical des échangeurs de chaleur. L'escamotage de la languette flexible s'effectue suite à un contact direct entre l'échangeur de chaleur et la surface oblique de la rampe. La languette flexible s'escamote par rotation autour d'un axe longitudinal, à la jonction entre la paroi de l'organe de maintien et la languette flexible, puis elle revient à sa position initiale par un mécanisme de rappel élastique. Le mécanisme de rappel permet à la surface plane transversale de la rampe de prendre appui contre une portion de l'échangeur de chaleur une fois celui-ci logé dans la zone d'accueil et prévient tous mouvements verticaux de ce dernier.

Selon une caractéristique de l'invention, des portions d'extrémité longitudinale des organes de maintien sont configurées de manière à être désolidarisées de la plaque de fond et comprennent des griffes qui crochètent les échangeurs de chaleur. En d'autres termes, des portions d'extrémité longitudinale des organes de maintien ont la particularité de ne pas être directement en contact avec la plaque de fond. Elles présentent ainsi une certaine flexibilité. Chaque extrémité longitudinale de chaque organe de maintien présente des griffes. Tout comme la rampe de la languette flexible, les griffes sont orientées en direction de la zone d'accueil. Les portions d'extrémité longitudinale des organes de maintien présentent une liberté de mouvement et se fléchissent par rotation autour d'un axe vertical, puis reviennent à leur position initiale par rappel élastique. Les griffes crochètent alors la partie inférieure de l'échangeur de chaleur et confèrent donc un maintien supplémentaire de l'échangeur de chaleur sur le dispositif de fixation. Le crochetage de l'échangeur de chaleur par les griffes garantit un maintien dans les directions longitudinales, transversales et verticales.

Une partie supérieure des organes de maintien est biseautée de manière à former une rampe d'accès en direction de la zone d'accueil de l'échangeur de chaleur. Par partie supérieure, on comprend le bord d'extrémité libre de l'organe de maintien, à l'opposé de la plaque de fond. Afin de faciliter l'insertion des échangeurs de chaleur entre les organes de maintien, la partie supérieure de ces derniers n'est pas plane, mais oblique vers la zone d'accueil des échangeurs de chaleurs. Cette forme oblique permet de faciliter l'insertion de l'échangeur de chaleur qui est dirigé vers sa zone d'accueil par glissement sur les formes obliques en cas de mauvais positionnement initial de l'échangeur de chaleur.

Selon une caractéristique de l'invention, le dispositif de fixation comprend une partie intermédiaire de positionnement par butée entre les organes de maintien des échangeurs de chaleur et la bride de fixation à un cadre de support du système d'échange thermique. La partie intermédiaire de positionnement par butée est disposée à distance des organes de maintien. Elle comprend une paroi de fond qui s'étend dans le même plan que la plaque de fond, une paroi de butée longitudinale, et deux parois de butée transversale. Lorsque les échangeurs de chaleur sont mis en place, leurs parois latérales sont disposées contre la partie intermédiaire de positionnement par butée. Plus précisément, ce sont des chambres collectrices, situées au niveau des parois latérales des échangeurs de chaleur, qui interagissent avec les parois de butée de la partie intermédiaire de positionnement par butée. Ces chambres collectrices comprennent une portion du circuit de distribution de fluides et présentent une épaisseur supérieure à l'épaisseur des échangeurs de chaleur

Les extrémités de la paroi de butée longitudinale sont repliées en angle droit dans une direction parallèle à un axe longitudinal, vers les organes de maintien, formant les parois de butée transversale. Lorsque les échangeurs de chaleur sont insérés sur le dispositif de fixation, les chambres collectrices des échangeurs de chaleur, qui ne sont donc pas enserrées par les organes de maintien, prennent appui sur la paroi de butée longitudinale, mais également sur les parois de butée transversales. Ces dernières assurent que les échangeurs de chaleur conservent une distance maximale l'un par rapport à l'autre, ce qui optimise l'efficacité du système d'échange thermique.

Selon une caractéristique de l'invention, la plaque de fond comprend un évidement de matière entre les organes de maintien et la partie intermédiaire de positionnement par butée. Cet évidement de matière est opéré à partir des portions d'extrémité longitudinale des organes de maintien jusqu'à la paroi de fond de la partie intermédiaire de positionnement par butée. Afin que le dispositif de fixation demeure monobloc, seule une bande centrale de la plaque de fond subsiste pour conserver une liaison entre la partie comprenant les organes de maintien et la paroi de fond de la partie intermédiaire de positionnement par butée. L'évidement de matière a pour fonctionnalité de permettre une légère flexibilité mécanique entre les différentes parties du dispositif de fixation, malgré la rigidité de la plaque de fond. Cette flexibilité mécanique permet d'assouplir les exigences de dimensions des échangeurs de chaleur. Sans cet évidement de matière, le dispositif de fixation aurait eu une rigidité plus élevée ce qui peut entraîner des ruptures mécaniques par exemple en cas d'insertion d'échangeurs de chaleur présentant des dimensions légèrement différentes des dimensions de l'espace prévu pour les recevoir, ou lors du montage du dispositif de fixation sur le cadre de support.

Concernant la bride de fixation, celle-ci est pourvue d'un moyen de liaison apte à coopérer avec le cadre de support du système d'échange thermique. Les échangeurs de chaleur sont montés sur le cadre de support qui maintient le système d'échange thermique au sein de la calandre située sur la face avant du véhicule. La fixation entre le cadre de support et le dispositif de fixation s'effectue par le biais de la bride de fixation. Le type de moyen de liaison de la bride de raccordement et du cadre de support ne sont pas spécifiques tant qu'ils sont aptes à coopérer l'un avec l'autre. La bride de raccordement et la partie du cadre de support interagissant avec la bride de raccordement peuvent par exemple être pourvues d'un trou assurant l'insertion d'un moyen de fixation tel qu'une vis qui solidarise l'ensemble. La liaison peut également s'effectuer par le biais d'un système de languette ou de clip.

Comme mentionné précédemment, la bride de fixation est située à égale distance des extrémités transversales de la plaque de fond. Le fait de centrer la bride de fixation par rapport à la plaque de fond permet de répartir équitablement les contraintes mécaniques agissant sur le dispositif de fixation et ainsi de limiter les risques de rupture mécanique.

L'invention revendique également un système d'échange thermique comprenant au moins deux échangeurs de chaleur et un dispositif de fixation tel que décrit précédemment, dans lequel le dispositif de fixation est agencé en regard d'un bord d'extrémité verticale des échangeurs de chaleur, ainsi qu'un cadre de support sur lequel est fixé le dispositif de fixation. Il convient de noter que l'orientation verticale est définie en fonction d'une position du système d'échange thermique conforme à celle qu'il prend une fois assemblé dans le véhicule. Le dispositif de fixation est par exemple agencé sur la partie inférieure des échangeurs de chaleur. Le dispositif de fixation est fixé sur le cadre de support par l'intermédiaire de la bride de fixation.

Selon une caractéristique de l'invention, les échangeurs de chaleur sont maintenus mécaniquement par un deuxième dispositif de fixation situé à l'extrémité longitudinale opposée de l'extrémité longitudinale comprenant le premier dispositif de fixation. Les échangeurs de chaleur sont donc maintenus de part et d'autre par un dispositif de fixation. Le deuxième dispositif de fixation est identique au premier. Ils assurent donc les mêmes fonctions qui sont de figer chaque échangeur de chaleur, maintenir les échangeurs de chaleur entre eux, et assurer la fixation au cadre de support. L'association des deux dispositifs de fixation à chaque extrémité longitudinale des échangeurs de chaleur assure un maintien optimal.

D'autres caractéristiques, détails et avantages de l'invention ressortiront plus clairement à la lecture de la description détaillée donnée ci-après, et de plusieurs exemples de réalisation donnés à titre indicatif et non limitatif en référence aux dessins schématiques annexés d'autre part, sur lesquels :
[Fig.1] est une vue générale d'un système d'échange thermique lié à un cadre de support et comprenant un dispositif de fixation tel que l'invention,
[Fig.2] représente le dispositif de fixation,
[Fig.3] est une vue du dessus du dispositif de fixation,
[Fig.4] illustre l'insertion des échangeurs de chaleur sur le dispositif de fixation,
[Fig.5] est une vue en coupe de la coopération entre des échangeurs de chaleur et du dispositif de fixation,
[Fig.6] est une représentation de la liaison entre la bride de fixation du dispositif de fixation et le cadre de support.

Pour des conditions de clarté de la description détaillée du dispositif de fixation, le trièdre LVT représentera l'orientation des différents éléments de la description détaillée. Les directions longitudinales L et verticales V correspondent à des axes parallèles aux deux droites sécantes définissant le plan d'allongement d'un échangeur de chaleur, et la direction transversale T correspond à un axe perpendiculaire à l'une quelconque des directions L ou V, et correspond à la direction principale du trajet du flux d'air amené à traverser le système d'échange thermique.

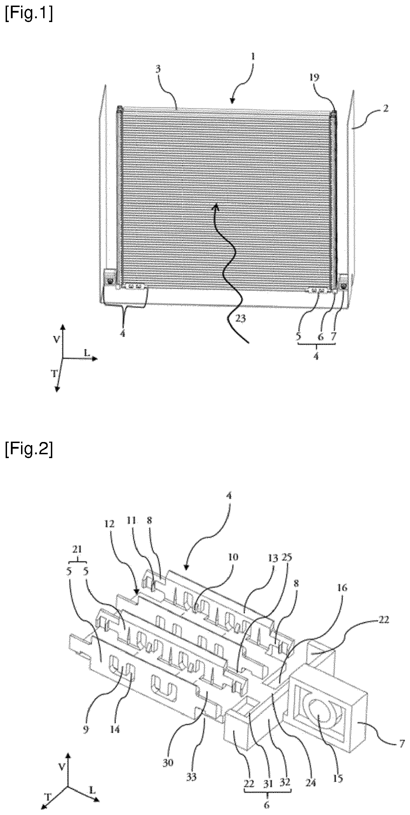

La figure 1 est une représentation générale d'un système d'échange thermique 1. Le système d'échange thermique 1 comprend une pluralité d'échangeurs de chaleur 3 superposés, ici au nombre de deux. Le système d'échange thermique 1 est généralement disposé au niveau de la calandre située sur la face avant d'un véhicule, de manière à ce que les échangeurs de chaleur 3 soient traversés par un flux d'air 23, transversal aux échangeurs de chaleur 3, qui échange des calories avec un fluide caloporteur amené à circuler dans le circuit de distribution des échangeurs de chaleur 3.

Chaque échangeur de chaleur 3 comporte un faisceau de tubes ou de plaques, à l'intérieur desquels circule le fluide caloporteur et qui forme la surface d'échange de chaleur entre le fluide et le flux d'air, ainsi que des chambres collectrices 19 qui bordent latéralement la surface d'échange de chaleur.

Les échangeurs de chaleur 3 comprennent des ailettes disposées dans la zone entre les tubes ou les plaques à travers laquelle passe le flux d'air 23, les ailettes consistant en de la tôle ondulée en contact thermique avec les tubes ou plaques et dont la fonction est d'augmenter la surface d'échange avec le flux d'air 23 passant à travers l'échangeur.

Pour que le système d'échange thermique 1 soit mis en place et maintenu dans la face avant du véhicule en regard de la calandre, et pour que les échangeurs de chaleur soient superposés l'un par rapport à l'autre en respectant un écartement théorique calculé pour obtenir un échange thermique optimal dans chaque échangeur de chaleur, chaque échangeur de chaleur est fixé à un cadre de support 2. Sur la figure 1, le cadre de support 2 encadre le système d'échange thermique 1 sur trois côtés de ce système d'échange thermique, mais il est possible qu'il s'étende sur tout le pourtour des échangeurs.

La liaison entre le système d'échange thermique 1, et les échangeurs qui le composent, et le cadre de support 2 s'effectue par le biais d'au moins un dispositif de fixation 4 selon l'invention. Le dispositif de fixation 4, en plus d'établir une liaison entre le système d'échange thermique 1 et le cadre de support 2, maintient en place chaque échangeur de chaleur 3 et prévient tout mouvement longitudinal, vertical et transversal selon le trièdre LVT, tel que cela sera exposé par la suite.

Chaque dispositif de maintien 4 comprend au moins des organes de maintien 5, dont seul l'un d'entre eux est visible sur la figure 1 pour chaque dispositif de maintien, une partie intermédiaire de positionnement par butée 6 et une bride de fixation 7.

Les organes de maintien 5 sont configurés pour être opérationnels sur un bord d'extrémité verticale du système d'échange thermique, et plus particulièrement au contact d'une paroi longitudinale inférieure des échangeurs de chaleur 3. Tel qu'illustré, en comparaison des dimensions correspondantes des échangeurs de chaleur 3, les organes de maintien 5 s'étendent sur une plus petite verticale et sur une plus petite dimension longitudinale, avec la dimension longitudinale des organes de maintien 5 plus élevée que la dimension verticale de ces organes de maintien.

La partie intermédiaire de positionnement par butée 6 prolonge longitudinalement les organes de maintien 5 et elle est configurée et dimensionnée de sorte à pouvoir loger les chambres collectrices 19 des échangeurs de chaleur 3. Cette partie intermédiaire présente au moins une paroi de butée contre le déplacement de l'échangeur de chaleur dans la direction longitudinale, en éloignement de l'autre échangeur de chaleur.

La bride de fixation 7 est solidaire de la partie intermédiaire 6 et elle consiste en la partie du dispositif de fixation 4 liée au cadre de support 2, configurée le cas échéant pour coopérer avec un moyen de fixation apte à rendre solidaire la bride de fixation, et donc tout l'échangeur de chaleur, du cadre.

D'autres détails de chacun des éléments composant le dispositif de fixation 4 seront décrits par la suite.

Dans l'exemple illustré sur la figure 1, deux dispositifs de fixation 4 sont situés de part et d'autre des échangeurs de chaleur 3, ou plus particulièrement à chaque extrémité longitudinale du système d'échange thermique. Cette double fixation renforce le maintien de chacun des échangeurs de chaleur 3 par rapport à la face avant du véhicule, notamment en assurant la fixation de chacun des échangeurs de chaleur 3 au cadre de support 2.

La figure 2 représente le dispositif de fixation 4 de l'invention seul, sans échangeur de chaleur et cadre de fixation associés, afin de pouvoir décrire le dispositif de fixation plus en détail.

Le dispositif de fixation 4 comprend une pluralité d'organes de maintien 5, ici une paire, formant respectivement saillie d'une plaque de fond 12 commune. La partie intermédiaire de positionnement par butée 6 est disposée dans le prolongement de la plaque de fond commune aux organes de maintien, et la bride de fixation 7 est solidaire de la plaque de fond 12 via une paroi de la partie intermédiaire de positionnement par butée 6 dont elle fait saillie. Le dispositif de fixation 4 est donc entièrement monobloc en ce sens que les éléments qui le composent, parmi lesquels les organes de maintien 5 et la plaque de fond 12, sont indissociables les uns des autres sans casser le dispositif de fixation.

Les organes de maintien 5 se présentent sous la forme de parois disposées en saillie d'une première face de la plaque de fond 12 et s'étendant perpendiculairement à la plaque de fond 12. Une extrémité verticale libre de chaque organe de maintien 5, à l'opposé de la plaque de fond, est définie par une partie supérieure 13.

Les organes de maintien 5 sont équipées d'au moins une languette flexible 9. Dans le mode de réalisation présenté, chaque organe de maintien 5 comprend deux languettes flexibles 9.

Les organes de maintien 5 sont agencés sur la plaque de fond commune de manière à être tous parallèles entre eux, en étant tous identiques entre eux. Seule leur orientation varie, de manière à ce que les organes de maintien soient regroupés par paire 21 dans laquelle deux organes de maintien 5 sont tournés l'un vers l'autre avec leurs languettes flexibles 9 en regard les unes des autres. De la sorte, chaque paire 21 est apte à assurer le maintien d'un échangeur de chaleur. Deux organes de maintien 5 formant une paire 21 sont espacées d'une distance permettant d'accueillir les échangeurs de chaleur, définissant ainsi une zone d'accueil 30 délimitée par cette paire d'organes de maintien et par la plaque de fond située entre les deux organes de maintien formant cette paire.

Chaque languette flexible 9 est agencée dans le plan d'allongement formé par l'organe de maintien 5 qui la comprend, à l'exception d'une rampe 10 formée en saillie de la base de la languette flexible 9, et orientée en direction de l'autre organe de maintien 5 formant la paire 21. Cette géométrie de la languette flexible 9 n'est valable que lorsque celle-ci est au repos, c'est-à-dire lorsqu'elle n'est pas escamotée. La languette flexible 9 s'étend principalement selon un axe vertical V et l'organe de maintien qui la porte est configuré de telle sorte qu'elle est flexible entre la position de repos et une position escamotée par pivotement autour d'un axe longitudinal. Chaque languette flexible est entourée par un évidement 14 en forme de U, la languette flexible 9 n'étant retenue que par la partie supérieure 13 de l'organe de maintien 5 et n'étant donc pas en contact avec la plaque de fond 12. C'est cet évidement 14 qui garantit la flexibilité de la languette flexible 9.

La rampe 10 est disposée sur une des faces de chaque languette flexible 9. La rampe 10 s'étend selon vers l'autre organe de maintien 5 formant la paire 21 et ne fait donc pas partie, tel que cela a été précisé précédemment, du plan d'allongement formé par l'organe de maintien 5 contrairement à la base de la languette flexible 9. Tel qu'illustré, la rampe 10 présente une paroi plane transversale, tournée vers la plaque de fond 12 pour former butée au dégagement de l'échangeur de chaleur lorsque celui-ci est logé dans la zone d'accueil 30, comme cela sera décrit par la suite, et une paroi oblique, orientée à l'opposé de la paroi plane transversale, facilitant l'escamotage de la languette flexible sous l'effet du contact avec l'échangeur de chaleur lors de l'insertion de ce dernier entre la paire d'organes de maintien.

Chaque organe de maintien 5 s'étend principalement longitudinalement. Plus particulièrement une portion centrale, dans laquelle sont disposées les languettes flexibles 9, est prolongée longitudinalement de part et d'autre par une portion d'extrémité longitudinale 8. Les portions d'extrémité longitudinale 8 ont une dimension verticale inférieure à la dimension verticale d'une portion centrale des organes de maintien 5. Ainsi, contrairement à la portion centrale des organes de maintien 5, les portions d'extrémité longitudinale 8 ne sont pas en contact avec la plaque de fond 12. Par ailleurs, un dégagement de matière 33 est effectué sur la plaque de fond 12, au droit des portions d'extrémité longitudinale 8. Le dégagement de matière 33 s'étend jusqu'à la jonction entre ces dernières et la portion centrale des organes de maintien 5. Tout comme les languettes flexibles 9, les portions d'extrémité longitudinale 8 présentent donc une certaine flexibilité assurant un dégagement transversal, autour cette fois d'un axe vertical V formé par la jonction entre une portion centrale des organes de maintien 5 et la portion d'extrémité longitudinale 8 concernée.

Les portions d'extrémité longitudinale 8 comprennent chacune des griffes 11 formant saillie de manière transversale, dans le même sens que la rampe 10 des languettes flexibles 9, c'est-à-dire vers l'autre organe de maintien 5 formant une paire 21. Les griffes 11 s'étendent transversalement et présentent à l'opposé de la portion d'extrémité longitudinale une pointe acérée, susceptible de s'ancrer dans les ailettes formées entre les tubes ou plaques des échangeurs de chaleur. Les griffes 11 comprennent également, tout comme pour la rampe 10, une paroi supérieure oblique facilitant l'escamotage des griffes et de la portion d'extrémité longitudinale associée pour permettre l'insertion de l'échangeur de chaleur dans la zone d'accueil. Par retour élastique, les griffes 11 participent à la fixation des échangeurs de chaleur comme cela sera décrit par la suite.

Comme cela a été mentionné précédemment, chaque organe de maintien 5 est identique. Les organes de maintien 5 sont disposés par paires 21 et chaque organe de maintien 5 compris dans une paire 21 présente une orientation différente l'un par rapport à l'autre. Les organes de maintien 5 sont disposés dans une orientation telle que les rampes 10 et les griffes 11 sont orientées en direction de la zone d'accueil 30 des échangeurs de chaleur. Les rampes 10 et les griffes 11 sont donc destinées à interagir avec les échangeurs de chaleur.

La partie supérieure 13 de chaque organe de maintien 5 est taillée en biseau. Le biseau forme un plan incliné orienté en direction de la zone d'accueil 30 des échangeurs de chaleur afin de faciliter l'insertion d'un échangeur de chaleur entre les organes de maintien 5 d'une paire 21. Le taillage en biseau des parties supérieures 13 est également présent au niveau des portions d'extrémité longitudinale 8 des organes de maintien 5.

Dans le mode de réalisation proposé ici, le dispositif de fixation 4 est fonctionnel pour le maintien de deux échangeurs de chaleur, ce qui nécessite donc quatre organes de maintien 5 organisées en deux paires 21.

Le dispositif de fixation 4 comprend une zone de rigidification 25 entre chaque paire 21 d'organes de maintien 5. Cette zone de rigidification est formée par une portion de la plaque de fond 12 s'étendant entre les paires d'organes de maintien. Contrairement aux portions de la plaque de fond 12 participant à délimiter une zone d'accueil avec les organes de maintien, qui réalisent la tenue d'une paire d'organes de maintien et qui forment une butée à l'insertion de l'échangeur de chaleur dans cette zone d'accueil, la portion de la plaque de fond formant la zone de rigidification 25 n'a pas de contact avec des échangeurs de chaleur et a pour fonction de rigidifier la zone entre deux paires d'organes de maintien notamment pour que l'une des paires ne s'écarte pas de l'autre sous l'effet de contraintes exercées sur l'échangeur de chaleur qu'elle porte.

Dans le mode de réalisation illustré, le dispositif de fixation 4 est apte à accueillir deux échangeurs de chaleur de sorte qu'il n'y a qu'une seule zone de rigidification 25 séparant les deux zones d'accueil 30 du dispositif de fixation 4.

La partie intermédiaire de positionnement par butée 6 s'étend dans le prolongement longitudinal des organes de maintien 5, en étant relié uniquement par une bande centrale de matière 24. La partie intermédiaire de positionnement par butée 6 comprend une paroi de fond 31, qui s'étend dans le même plan que la plaque de fond 12, une paroi de butée longitudinale 32 s'étendant principalement selon un axe vertical V et selon un axe transversal T, et deux parois de butée transversale 22, s'étendant principalement selon un axe vertical V et selon un axe longitudinal L. La paroi de butée longitudinale 32 est perpendiculaire aux organes de maintien 5 tandis que les parois de butée transversale 22 sont parallèles aux organes de maintien 5.

Comme son nom l'indique, la partie intermédiaire de positionnement par butée 6 est une zone sur laquelle les parois latérales des échangeurs de chaleur, prennent appui et sont maintenues par butée. Les parois de butée transversale 22 sont disposées de part et d'autre de la paroi de butée longitudinale 32. Ces parois de butée transversale 22 forment un angle de 90 degrés avec la paroi de butée longitudinale 32 et s'étendent donc selon un axe longitudinal L, vers les organes de maintien 5. La partie intermédiaire de positionnement par butée 6 forme ainsi une zone de réception d'une extrémité longitudinale des échangeurs de chaleur et plus particulièrement des chambres collectrices agencées en extrémité des échangeurs de chaleur.

Un évidement de matière 16 se situe entre la zone de la plaque de fond 12 comprenant les organes de maintien 5 et la partie intermédiaire de positionnement par butée 6. L'évidement de matière 16 assure une certaine flexibilité entre la zone de la plaque de fond 12 comprenant les organes de maintien 5 et paroi de fond 31 de la partie intermédiaire de positionnement par butée 6, ce qui garantit une flexibilité du dispositif de fixation 4. Cette flexibilité permet de compenser certaines forces pouvant être exercées lors du montage du dispositif de fixation 4 suite à d'éventuelles défauts de réalisation des pièces, limitant ainsi le potentiel risque de rupture du dispositif de fixation 4, en particulier si deux dispositifs de fixation 4 sont disposés de part et d'autre des échangeurs de chaleur. Afin de maintenir l'aspect monobloc du dispositif de fixation 4, seule la bande centrale de matière 24 subsiste au niveau de cet évidement de matière pour faire lien entre la plaque de fond 12 commune aux organes de maintien et la paroi de fond 31 de la partie intermédiaire de positionnement par butée 6.

La bride de fixation 7 s'étend à l'opposé des organes de maintien 5 par rapport à la partie intermédiaire de positionnement par butée 6, en étant solidaire de la surface externe de la partie intermédiaire de positionnement par butée 6. La bride de fixation 7 est destinée à être liée au cadre de support du système d'échange thermique. Dans le mode de réalisation décrit ici, la bride de fixation 7 se situe dans le prolongement longitudinal de la bande centrale de matière 24, et se présente sous la forme d'une pièce rectangulaire de dimension transversale identique à la dimension transversale de la bande centrale de matière 24. La bride de fixation 7 est perpendiculaire à la paroi de butée longitudinale 32 de la partie intermédiaire de positionnement par butée 6, et comprend un orifice de bride 15 qui traverse la bride de fixation 7 selon un axe transversal T. Des précisions concernant la liaison entre la bride de fixation 7 et le cadre de support du système d'échange thermique par le biais de l'orifice de bride 15 seront données par la suite.

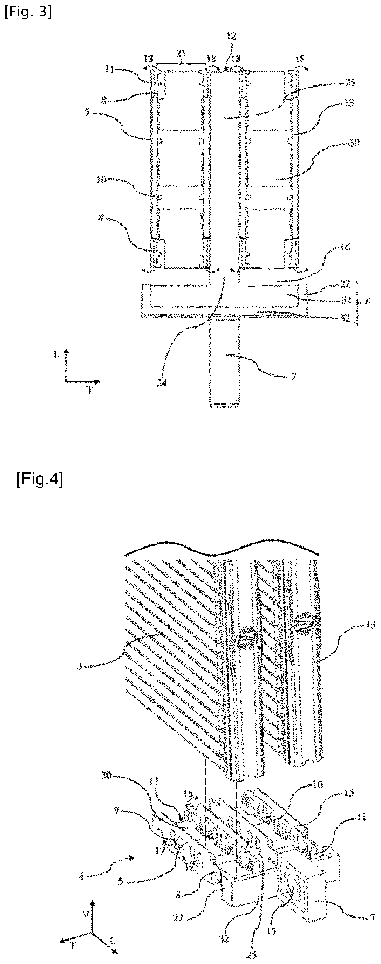

La figure 3 est une vue de dessus du dispositif de fixation selon l'invention, permettant notamment de rendre visible les zones d'accueil 30 des échangeurs de chaleur, représentées par les zones situées entre les organes de maintien 5 formant une paire 21. Les éléments des organes de maintien 5 disposés en saillie des parois des organes de maintien 5, de manière à s'étendre au moins partiellement en travers des zones d'accueil 30 des échangeurs de chaleur sont ici mis en évidence, à savoir les rampes 10 des languettes flexibles, ainsi que les griffes 11 des portions d'extrémité longitudinale 8 des organes de maintien 5. Cet angle de vue permet également de visualiser la flexibilité des portions d'extrémité longitudinale 8 des organes de maintien 5, qui peuvent se fléchir selon une rotation autour d'un axe vertical 18, symbolisée ici par une flèche courbée en pointillés. Toutes les portions d'extrémité longitudinale 8 des organes de maintien 5 ont dans l'exemple illustré cette propriété de fléchissement.

Tel que cela a été précisé précédemment, la zone de rigidification 25 est située entre chaque paire 21 d'organes de maintien 5. Cette zone de rigidification 25 assure un maintien de la distance entre les organes de maintien 5 voisins de deux paires 21 distinctes, et donc de la distance entre chaque paire 21 d'organes de maintien 5. La position des paires 21 d'organes de maintien 5 étant assurée, la position de deux échangeurs de chaleur lorsque ceux-ci sont mis en place de part et d'autre de la zone de rigidification 25 est fiable. La zone de rigidification 25 présente une dimension transversale calculée pour que l'écartement résultant entre les deux échangeurs de chaleur soit optimal pour la fonction thermique qu'ils réalisent respectivement.

Du point de vue de la figure 3, on constate que les parois de butée transversale 22 de la partie intermédiaire de positionnement par butée 6 sont décalés transversalement par rapport aux parois des organes de maintien, de sorte que ces parois de butée transversales ne s'étendent pas dans la continuité du plan d'allongement principal des organes de maintien 5 disposés en bordure transversale de la plaque de fond 12. En effet, les échangeurs de chaleur comprennent des chambres collectrices 19 (visibles en figure 1) présentant une dimension transversale sensiblement plus élevée que la dimension transversale du corps des échangeurs de chaleur. La zone de réception des chambres collectrices doit donc présenter une dimension transversale plus élevée que les zones d'accueil des échangeurs de chaleur. Dans l'exemple illustré, la face interne des parois de butée longitudinale 22 est alignée sur le plan dans lequel s'inscrit la face externe des organes de maintien 5 disposés en bordure transversale de la plaque de fond 12.

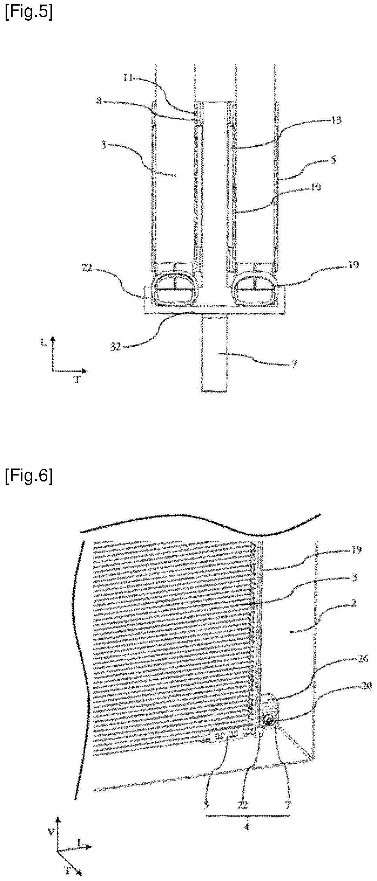

La figure 4 illustre la mise en place des échangeurs de chaleur 3 au sein du dispositif de fixation 4. La figure 5 est une vue en coupe d'un angle de vue selon un axe vertical V des échangeurs de chaleur 3 insérés dans le dispositif de fixation. Chaque échangeur de chaleur 3 est inséré par translation selon un axe vertical V, selon une direction perpendiculaire au plan d'allongement de la paroi de fond 12. L'échangeur de chaleur est donc amené à rencontrer les organes de maintien 5 de la paire 21 correspondante avant d'être disposés en regard de la plaque de fond 12, par le biais d'un contact direct avec la zone d'accueil 30. Lors de l'insertion, plusieurs éléments du dispositif de fixation 4 interagissent avec l'échangeur de chaleur 3. Les faces supérieures 13 taillées en biseau des organes de maintien 5 et des portions d'extrémité longitudinale 8 aident au guidage de l'échangeur de chaleur 3 pour que ce dernier soit centré dans leur zone d'accueil 30. L'échangeur de chaleur est ensuite en contact avec les parois obliques des rampes 10 des languettes flexibles 9 ainsi que des griffes 11 des portions d'extrémité longitudinale 8 des organes de maintien 5. Comme décrit précédemment, les languettes flexibles 9 et les portions d'extrémité longitudinale 8 sont configurées de manière à pouvoir se déformer élastiquement pour laisser passage à l'échangeur de chaleur. En d'autres termes, sous l'effet de la force de contact exercée par la portion inférieure de l'échangeurs de chaleur 3 sur les rampes 10 et les griffes 11, les languettes flexibles 9 et les portions d'extrémité longitudinale 8 fléchissent pour prendre une position escamotée dans laquelle le passage est laissé libre pour l'insertion de l'échangeur de chaleur. Les languettes flexibles 9 fléchissent selon une rotation autour d'un axe longitudinal 17 tandis que les portions d'extrémité longitudinale 8 des organes de maintien 5 fléchissent selon une rotation autour d'un axe vertical 18. L'insertion de l'échangeur de chaleur 3 se poursuit jusqu'à ce qu'il y ait contact direct entre l'échangeur de chaleur 3 et les zones d'accueil 30 de la plaque de fond 12 du dispositif de fixation 4. Le positionnement final des échangeurs de chaleur 3 est visible en figure 5.

Une fois l'échangeur de chaleur 3 inséré dans sa zone d'accueil appropriée, la ou les languettes flexibles 9 reviennent à leur position initiale par rappel élastique. La ou les rampes 10 se positionnent alors au-dessus d'un tube ou d'une plaque de l'échangeur, le cas échéant en déformant les ailettes disposées directement au-dessus de ce tube ou de cette plaque, de manière à former une butée au dégagement de l'échangeur de chaleur. Les rampes 10 des languettes flexibles 9 empêchent ainsi tout mouvement vertical dans le sens inverse de l'insertion. Les portions d'extrémité longitudinale 8 des organes de maintien 5 reviennent également à leur position initiale par rappel élastique. Les extrémités acérées des griffes 11 crochètent alors les ailettes des échangeurs de chaleur 3. Ce crochetage assure un maintien des échangeurs de chaleur 3, que ce soit dans une direction longitudinale, verticale ou transversale. Par ailleurs, les parois longitudinales des organes de maintien 5 en elle-même assurent un maintien transversal des échangeurs de chaleur 3 grâce aux paires d'organes de maintien 5 enserrant chacun des échangeurs de chaleur 3. La prise des rampes 10 et des griffes 11 dans le volume de l'échangeur de chaleur correspondant, en déformant le cas échéant les ailettes, est visible sur la figure 5.

Les chambres collectrices 19 quant à elles prennent place au niveau de la partie intermédiaire de positionnement par butée 6. Elles sont alors maintenues dans une direction longitudinale par contact direct avec la paroi de butée longitudinale 32 de la partie intermédiaire de positionnement par butée 6. Les parois de butée transversale 22 assurent par ailleurs un maintien transversal des échangeurs de chaleur 3. Ce maintien par la partie intermédiaire de positionnement par butée est également visible en figure 5.

La figure 6 est une représentation de la liaison entre la bride de fixation 7 et le cadre de support 2. Il s'agit là d'un exemple de type de fixation, mais une multitude de moyens de fixation est envisageable dès lors que conformément à l'invention, on permet de fixer en une opération un dispositif de fixation 4 commun à une pluralité d'échangeurs de chaleur 3.

Comme indiqué dans cet exemple de réalisation, la bride de fixation est percée d'un orifice traversant la bride de fixation 7 dans une direction transversale. Afin de pouvoir être fixée, la bride de fixation 7 coopère avec un relief 26 du cadre de support 2. Ce relief 26 est également pourvu d'un orifice. Lorsque la bride de fixation 7 et le relief 26 coopèrent entre eux, leurs orifices respectifs sont en regard l'un par rapport à l'autre. Ainsi, un moyen de fixation 20, ici une vis par exemple, dont la tige traverse les orifices et fixe la bride de fixation 7 et le relief 26 entre eux peut être utilisé. Le dispositif de fixation 4 maintenant déjà les échangeurs de chaleur 3 par l'intermédiaire de tous les éléments décrits précédemment, il est alors également lié au cadre de support 2, fixant ainsi l'ensemble du système d'échange thermique au sein de la calandre du véhicule.

La figure 6 permet également de constater le faible recouvrement des organes de maintien 5 sur les échangeurs de chaleur 3. Le dispositif de fixation 4, en plus d'assurer l'ensemble des fixations en étant monobloc, limite aussi grandement l'encombrement mécanique engendré par sa présence, de par ses dimensions relativement faibles comparées aux dimensions correspondantes du système d'échange thermique.

L'invention ne saurait toutefois se limiter aux moyens et configurations décrits et illustrés ici, et elle s'étend également à tous moyens ou configurations équivalents et à toute combinaison techniquement opérante de tels moyens. Les modes de réalisation décrits ci-dessus ne sont nullement limitatifs ; on pourra notamment imaginer des variantes de l'invention ne comprenant qu'une sélection de caractéristiques décrites par la suite isolées des autres caractéristiques mentionnées dans ce document, si cette sélection de caractéristiques est suffisante pour conférer un avantage technique ou pour différencier l'invention par rapport à l'état de la technique antérieur.

## Revendications

1. Dispositif de fixation (4) pour au moins deux échangeurs de chaleur (3) superposés l'un par rapport à l'autre et intégrés dans un système d'échange thermique (1) d'un véhicule, **caractérisé en ce que** le dispositif de fixation (4) est un ensemble monobloc comprenant des organes de maintien (5) des échangeurs de chaleur (3) d'une part, et une bride de fixation (7) à un cadre de support (2) du système d'échange thermique (1) d'autre part, lesdits organes de maintien (5) étant agencés en saillie d'une seule et même plaque de fond (12) et sont des parois perpendiculaires à la plaque de fond (12) et sont disposés par paires (21), chacune des paires (21) étant configurée pour enserrer l'extrémité inférieure d'un échangeur de chaleur (3) et assurer un maintien transversal de cet échangeur.

2. Dispositif de fixation (4) selon la revendication 1, dans lequel les paires (21) d'organes de maintien (5) sont espacées l'une par rapport à l'autre par une zone de rigidification (25).

3. Dispositif de fixation (4) selon la revendication 1, comprenant deux paires (21) d'organes de maintien (5), séparées par une zone de rigidification (25), la bride de fixation (7) étant agencée dans une position centrée dans le prolongement de la zone de rigidification (25).

4. Dispositif de fixation (4) selon l'une quelconque des revendications précédentes, dans lequel les organes de maintien (5) comprennent au moins une languette flexible (9) apte à s'escamoter par rotation autour d'un axe longitudinal, dégageant une zone d'accueil (30) pour la mise en place d'un échangeur de chaleur (3), et apte à assurer un maintien vertical, par rappel élastique en travers de la zone d'accueil (30).

5. Dispositif de fixation (4) selon l'une quelconque des revendications précédentes, dans lequel des portions d'extrémité longitudinale (8) des organes de maintien (5) sont configurées de manière à être désolidarisées de la plaque de fond (12) et comprennent des griffes (11) qui crochètent les échangeurs de chaleur (3).

6. Dispositif de fixation (4) selon l'une quelconque des revendications précédentes, comprenant une partie intermédiaire de positionnement par butée (6) entre les organes de maintien (5) des échangeurs de chaleur (3) et la bride de fixation (7) à un cadre de support (2) du système d'échange thermique (1).

7. Dispositif de fixation (4) selon la revendication précédente, dans lequel la plaque de fond (12) comprend un évidement de matière (16) entre les organes de maintien (5) et la partie intermédiaire de positionnement par butée (6).

8. Système d'échange thermique (1) comprenant au moins deux échangeurs de chaleur (3) et un dispositif de fixation (4) selon l'une quelconque des revendications précédentes, dans lequel le dispositif de fixation (4) est agencé en regard d'un bord d'extrémité verticale des échangeurs de chaleur (3), ainsi qu'un cadre de support (2) sur lequel est fixé le dispositif de fixation (4).

9. Système d'échange thermique (1) selon la revendication 8, dans lequel les échangeurs de chaleur (3) sont maintenus mécaniquement par un deuxième dispositif de fixation situé à l'extrémité longitudinale opposée de l'extrémité longitudinale comprenant le premier dispositif de fixation (4).

## Patentansprüche

1. Befestigungsvorrichtung (4) für mindestens zwei Wärmetauscher (3), die übereinander angeordnet und in ein Wärmetauschsystem (1) eines Fahrzeugs integriert sind, **dadurch gekennzeichnet, dass** die Befestigungsvorrichtung (4) eine einstückige Einheit ist, die einerseits Organe (5) zum Halten der Wärmetauscher (3) und andererseits einen Flansch (7) zur Befestigung an einem Tragrahmen (2) des Wärmetauschsystems (1) umfasst, wobei die Halteorgane (5) von ein und derselben Bodenplatte (12) vorstehend angeordnet sind, senkrecht zur Bodenplatte (12) verlaufende Wände sind und in Paaren (21) angeordnet sind, wobei jedes der Paare (21) dazu konfiguriert ist, das untere Ende eines Wärmetauschers (3) einzuspannen und eine Querhalterung dieses Wärmetauschers zu gewährleisten.

2. Befestigungsvorrichtung (4) nach Anspruch 1, wobei die Paare (21) von Halteorganen (5) durch einen Versteifungsbereich (25) voneinander beabstandet sind.

3. Befestigungsvorrichtung (4) nach Anspruch 1, umfassend zwei Paare (21) von Halteorganen (5), die durch einen Versteifungsbereich (25) getrennt sind, wobei der Befestigungsflansch (7) in einer zentrierten Position in der Verlängerung des Versteifungsbereichs (25) angeordnet ist.

4. Befestigungsvorrichtung (4) nach einem der vorangehenden Ansprüche, wobei die Halteorgane (5) mindestens eine flexible Zunge (9) umfassen, die durch Drehung um eine Längsachse eingezogen werden kann, wodurch ein Aufnahmebereich (30) zur Anbringung eines Wärmetauschers (3) freigegeben wird, und die dazu geeignet ist, durch elastische Vorspannung quer zum Aufnahmebereich (30) eine vertikale Halterung zu gewährleisten.

5. Befestigungsvorrichtung (4) nach einem der vorangehenden Ansprüche, wobei Längsendabschnitte (8) der Halteorgane (5) dazu konfiguriert sind, von der Bodenplatte (12) gelöst zu werden, und Klauen (11) umfassen, die die Wärmetauscher (3) einhaken.

6. Befestigungsvorrichtung (4) nach einem der vorangehenden Ansprüche, umfassend einen Zwischenteil (6) zur Anschlagspositionierung zwischen den Halteorganen (5) der Wärmetauscher (3) und dem Flansch (7) zur Befestigung an einem Tragrahmen (2) des Wärmetauschsystems (1).

7. Befestigungsvorrichtung (4) nach dem vorangehenden Anspruch, wobei die Bodenplatte (12) eine Materialaussparung (16) zwischen den Halteorganen (5) und dem Zwischenteil (6) zur Anschlagspositionierung umfasst.

8. Wärmetauschsystem (1), umfassend mindestens zwei Wärmetauscher (3) und eine Befestigungsvorrichtung (4) nach einem der vorangehenden Ansprüche, wobei die Befestigungsvorrichtung (4) gegenüber einer vertikalen Endkante der Wärmetauscher (3) angeordnet ist, sowie einen Tragrahmen (2), an dem die Befestigungsvorrichtung (4) befestigt ist.

9. Wärmetauschsystem (1) nach Anspruch 8, wobei die Wärmetauscher (3) mechanisch durch eine zweite Befestigungsvorrichtung gehalten werden, die sich an dem Längsende befindet, das dem Längsende mit der ersten Befestigungsvorrichtung (4) gegenüberliegt.

## Claims

1. Device (4) for fixing at least two heat exchangers (3) that are stacked with respect to one another and are integrated in a heat exchange system (1) of a vehicle, **characterized in that** the fixing device (4) is a one-piece assembly comprising members (5) for holding the heat exchangers (3), for the one part, and a flange (7) for fixing to a support frame (2) of the heat exchange system (1), for the other part, said holding members (5) being arranged so as to protrude from one and the same base plate (12) and are walls perpendicular to the base plate (12) and are disposed in pairs (21), each of the pairs (21) being configured to grip the lower end of a heat exchanger (3) and transversely hold said heat exchanger.

2. Fixing device (4) according to Claim 1, wherein the pairs (21) of holding members (5) are spaced apart from one another by a stiffening zone (25).

3. Fixing device (4) according to Claim 1, comprising two pairs (21) of holding members (5) that are separated by a stiffening zone (25), the fixing flange (7) being arranged in a centred position in the continuation of the stiffening zone (25).

4. Fixing device (4) according to any one of the preceding claims, wherein the holding members (5) comprise at least one flexible tongue (9) that is able to retract by rotation about a longitudinal axis, opening up a receiving zone (30) for the fitting of a heat exchanger (3), and is able to vertically hold the latter by elastic return across the receiving zone (30).

5. Fixing device (4) according to any one of the preceding claims, wherein longitudinal end portions (8) of the holding members (5) are configured to be disconnected from the base plate (12) and comprise claws (11) that hook on the heat exchangers (3).

6. Fixing device (4) according to any one of the preceding claims, comprising an intermediate part (6) for positioning by abutment between the holding members (5) for the heat exchangers (3) and the flange (7) for fixing to a support frame (2) of the heat exchange system (1) .

7. Fixing device (4) according to the preceding claim, wherein the base plate (12) comprises a material cutout (16) between the holding members (5) and the intermediate part (6) for positioning by abutment.

8. Heat exchange system (1) comprising at least two heat exchangers (3) and a fixing device (4) according to any one of the preceding claims, wherein the fixing device (4) is arranged next to a vertical end edge of the heat exchangers (3), and a support frame (2) to which the fixing device (4) is fixed.

9. Heat exchange system (1) according to Claim 8, wherein the heat exchangers (3) are held mechanically by a second fixing device situated at the opposite longitudinal end from the longitudinal end comprising the first fixing device (4).
